(19) Europäisches Patentamt
European Patent Office
Office européen des brevets

(11) Numéro de publication: 0 322 310
A2

(12) # DEMANDE DE BREVET EUROPEEN

(21) Numéro de dépôt: 88403265.7

(22) Date de dépôt: 21.12.88

(51) Int. Cl.[4]: C 08 G 8/00
C 08 G 12/00, C 08 L 97/02

(30) Priorité: 23.12.87 FR 8718035
15.04.88 FR 8805035

(43) Date de publication de la demande:
28.06.89 Bulletin 89/26

(84) Etats contractants désignés:
AT BE CH DE ES FR GB GR IT LI LU NL SE

(71) Demandeur: Clavier, Philippe
27 Avenue de St-Germain
F-78160 Marly le Roi (FR)

(72) Inventeur: Clavier, Philippe
27 Avenue de St-Germain
F-78160 Marly le Roi (FR)

(74) Mandataire: Bouju, André
Cabinet Bouju 38 avenue de la Grande Armée
F-75017 Paris (FR)

(54) **Procédé pour la fabrication de résines thermodurcissables.**

(57) L'invention vise un procédé pour la fabrication de résines thermodurcissables par réaction entre un premier composé ayant au moins une fonction aldéhyde et un second composé organique ayant au moins une fonction hydrogène.

On utilise en tant que premier composé un déchet agricole contenant au moins un sucre susceptible d'être transformé par hydrolyse en un sucre ayant au moins une fonction aldéhyde.

Utilisation notamment pour la fabrication de panneaux en bois contreplaqué ou aggloméré.

EP 0 322 310 A2

## Description

### Procédé pour la fabrication de résines thermodurcissables

La présente invention concerne un procédé pour la fabrication de résines thermodurcissables par réaction entre un premier composé ayant une fonction aldéhyde et un second composé organique ayant au moins une fonction hydrogène.

L'invention vise également les résines thermodurcissables obtenues notamment selon le procédé précité.

Les résines thermodurcissables du genre précité les plus connues actuellement sont les résines urée formaldéhyde et les résines phénol formaldéhyde.

Ces résines sont obtenues par réaction entre un composé ayant au moins une fonction aldéhyde (formaldéhyde) et un composé ayant au moins une fonction hydrogène (urée ou phénol).

Ces résines sont couramment utilisées dans la fabrication du bois contreplaqué et du bois aggloméré constitué de fibres ou de sciure de bois agglomérées par une résine du genre précité.

La résine urée formaldéhyde ne résiste pas à l'eau. De ce fait elle ne convient pas pour les matériaux devant résister à l'eau. La résine phénol formaldéhyde résiste à l'eau mais est plus chère que la précédente.

Il a été constaté récemment que les vapeurs de formaldéhyde étaient cancérigènes. Or, les résines à base de formaldéhyde ne sont jamais complètement polymérisées, de sorte que celles-ci exhalent toujours une vapeur de formaldéhyde présentant des risques de cancer.

On cherche ainsi actuellement des résines pouvant remplacer les résines urée et phénolformaldéhyde précitées et ne présentant pas la nocivité de ces dernières.

Toutefois, les résines actuellement connues qui pourraient convenir sont beaucoup plus onéreuses que celles ci-dessus.

Le but de la présente invention est ainsi de proposer un procédé qui permette de fabriquer des résines qui puissent remplacer les résines formaldéhyde connues et qui présentent des propriétés au moins aussi intéressantes que ces dernières tout en étant avantageuses sur le plan économique.

Le procédé selon l'invention vise ainsi la fabrication de résines thermodurcissables par réaction entre un premier composé ayant au moins une fonction aldéhyde et un second composé organique ayant au moins une fonction hydrogène.Suivant l'invention, ce procédé est caractérisé en ce qu'on utilise en tant que premier composé un déchet agricole contenant au moins un sucre, ce dernier étant hydrolisé dans des conditions telles qu'on obtient par hydrolyse un sucre ayant une fonction aldéhyde.

Le demandeur a en effet constaté qu'il existait parmi les déchets agricoles des composés contenant au moins un sucre du genre précité.

Il s'agit en particulier du petit lait, notamment celui provenant de la fabrication des fromages.

Ce petit lait renferme suivant son origine entre 5 et 13% en poids de matières solides constituées essentiellement par du lactose, des protéines et des sels minéraux.

Ce petit lait n'a actuellement qu'une valeur économique faible, par exemple en porcherie. Ce petit lait est en tout cas produit en une quantité supérieure à sa demande. De plus, il ne peut être jeté, car il est considéré comme un polluant puisqu'il désoxygène l'eau.

Grâce à l'invention, ce petit lait trouve une valeur économique intéressante dans la mesure où il peut servir de base pour la fabrication de résines comparables aux résines urée formaldéhyde et phénolformaldéhyde connues.

En effet, le demandeur a constaté que le lactose contenu dans ce petit lait pouvait être transformé par hydrolyse en glucose et galactose qui présente une fonction aldéhyde et qui peut ainsi réagir avec un composé organique ayant une fonction hydrogène, comme par exemple l'urée et le phénol, pour produire une résine thermodurcissable n'ayant aucune nocivité.

On donne ci-après les formules développées du galactose et du glucose :

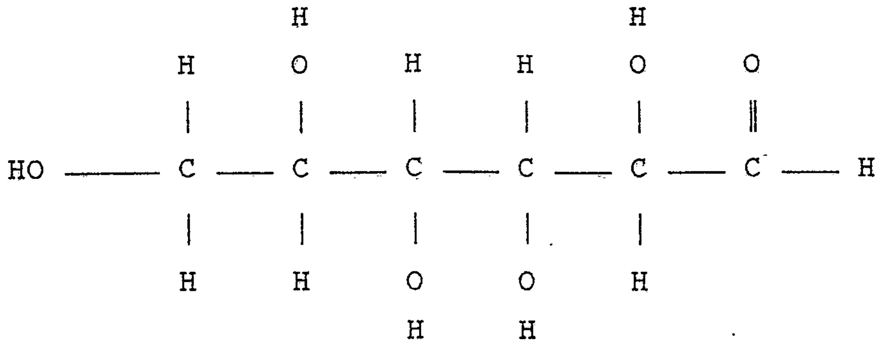

Galactose

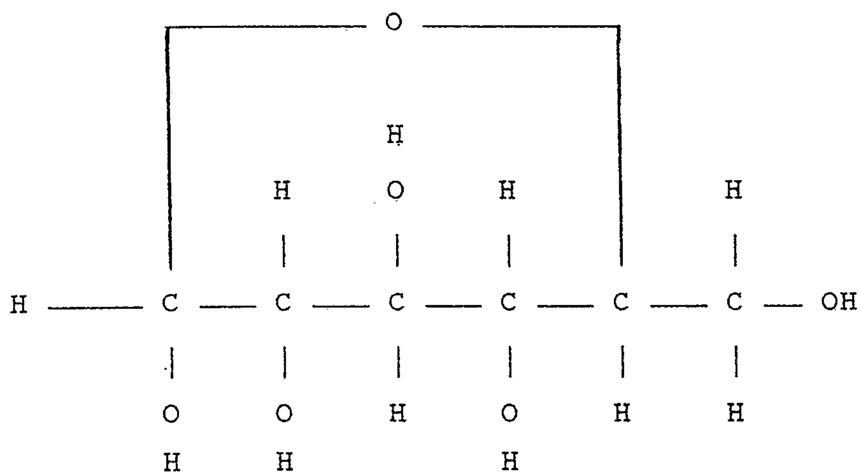

Glucose

Il est à remarquer que le glucose existe sous trois formes dont deux sont très proches de celle ci-dessus et ne comportent pas de fonction aldéhyde alors que la troisième est très proche du galactose et contient une fonction aldéhyde. Comme l'équilibre entre ces formes comporte en général une proportion faible de la forme proche du galactose, on peut la négliger dans la suite de cet exposé.

Le petit lait peut être soumis directement à la réaction d'hydrolyse. Il est cependant préférable de le débarrasser préalablement de son contenu en protéines par ultrafiltration, étant donné que cette récupération de protéines présente elle-même un intérêt économique complémentaire.

L'hydrolyse du petit lait ou de la solution de petit lait débarrassée de protéines lorsqu'elle est effectuée en milieu acide minéral fort (acide chlorhydrique ou sulfurique) à une température comprise entre 100 et 125° C, ne permet pas d'obtenir un sucre ayant une fonction aldéhyde. Par contre, ce résultat est obtenu en faisant réagir le petit lait en milieu neutre avec la lactase.

La solution contenant le lactose obtenue après hydrolyse est utilisable directement pour être transformée en résine par réaction avec le composé ayant au moins une fonction hydrogène.

Lors de cette réaction, la température est maintenue à une valeur inférieure à 100° C pour éviter la polymérisation.

La solution contenue dans la résine obtenue est ensuite chauffée à température supérieure à 102° C et sous une pression suffisante pour éviter l'évaporation de l'eau de cette solution, afin de polymériser partiellement la résine. Cette polymérisation est arrêtée en refroidissant brutalement la solution.

Le procédé selon l'invention peut également être mis en oeuvre en utilisant comme matière première l'amidon et en particulier l'amidon de maïs qui est produit en excès de sorte qu'il constitue un déchet agricole.

L'amidon s'hydrolyse en fournissant de l'altrose, du fructose, du galactose, du glucose, du gulose, de l'idose, du mannose, du sorbose et du talose. Parmi ces sucres, l'alose, l' altrose, le gulose, l'idose, le mannose, le sorbose et le talose présentent, comme le galactose, une fonction aldéhyde qui peut réagir avec un composé ayant une fonction hydrogène pour former une résine ayant d'excellentes propriétés.

D'autres particularités et avantages de l'invention apparaîtront encore dans la description ci-après.

On va décrire ci-après, à titre d'exemple non limitatif, la mise en oeuvre de l'invention à partir du petit lait provenant du lait de vache.

Le petit lait a la composition pondérale suivante:

| | |
|---|---|
| protéines : | 9,88 % |
| graisses : | 3,44 % |
| lactose : | 59,38 % |
| cendres : | 6,12 % |
| acide lactique : | 15,49 % |
| calcium : | 2,27 % |
| sodium : | 0,44 % |
| chlorures : | 1,28 % |
| phospore : | 1,20 % |

Ce petit lait a un pH qui est généralement compris entre 5,2 et 5,8 suivant qu'il provient de la fabrication de fromages moux, durs ou maigres.

Ce petit lait est directement utilisable pour la mise en oeuvre du procédé selon l'invention.

Il y a toutefois intérêt à séparer les protéines du petit lait, ce qui est réalisé par ultrafiltration. On obtient ainsi une solution aqueuse renfermant une matière sèche ayant approximativement la composition pondérale suivante :

| | |
|---|---|
| lactose : | 80 % |
| cendres : | $<$ 16 % |
| graisses : | $<$ 0,5 % |
| protéines : | 2 à 4 % |
| sels minéraux : | $<$ 4 % |

Le petit lait ou la solution concentrée en lactose ci-dessus est hydrolysé pour obtenir un mélange de galactose et de glucose.

On donne ci-après un exemple numérique illustrant cette hydrolyse.

On mélange dans une cuve le petit lait, lacto sérum ou lactose concentré entre 30 et 50% d'extrait sec avec de la lactase dans des proportions qui peuvent varier de 0,06% à 0,6% en volume de lactase par volume de petit lait, lacto serum ou lactose employé.

Une telle lactase est en particulier la lactase neutre de PFIZER vendue en liquide, comprenant 2 750 ONPG unités par millilitre. L'activité de cette lactase est optimum entre 31°C et 40°C et pour un pH entre 6,2 et 7.

En utilisant 0,6% en volume de lactase, on obtient pratiquement l'hydrolyse à 100% en 6 à 7 heures.

Beaucoup d'autres sources de lactase existent, dont l'action s'optimise pour des pH acide ou basique variables.

Comme la lactase est un produit cher, on peut la réutiliser en passant les produits obtenus à travers une membrane ultra-filtrante. Les lactases ayant des poids molaires au-dessus de 10 000 se séparent facilement par ultrafiltration du glucose et du galactose dont les poids moléculaires sont de l'ordre de 180.

On peut aussi envisager d'employer des colonnes dites à lactases immobilisées telles celles developpées par la société CORNING. Dans ce cas, le liquide à hydrolyser coule le long d'une couche de lactases qui l'hydrolysent. Les lactases ne sont pas entraînées par le liquide. L'opération est continue et le liquide est hydrolysé à 90%.

L'étape suivante du procédé selon l'invention est la cuisson de la résine.

On place dans un réacteur la solution précitée contenant du galactose et du glucose. En raison de l'hydrolyse en milieu acide le pH est inférieur à 2. On ajuste celui-ci à une valeur égale à environ 3,5 par addition d'une base qui réagit avec l'acide minéral pour former un sel minéral. La présence de ce sel minéral en plus des autres sels à l'état d'ions contenus dans la solution est utile car ils catalysent la réaction entre la fonction aldéhyde et le composé ayant une fonction hydrogène.

L'expérience a montré que la présence de glucose, de protéines et sels minéraux autres que ceux agissant comme catalyseur n'avaient aucune influence sur les propriétés de la résine obtenue.

Les composés organiques à fonction hydrogène qui peuvent être utilisés sont très nombreux. On citera à ce sujet bien entendu l'urée et le phénol. Tout composé ayant une fonction H comme le phénol ou ayant une fonction H attachée à un atome d'azote peut être utilisé.

Il est préférable toutefois que la molécule de ce composé soit asymétrique. Par ailleurs, les résines obtenues à partir de composés cycliques résistent à l'eau, tandis que les autres, comme ceux obtenus à partir de l'urée, ne résistent pas à l'eau.

De plus, il y a intérêt à choisir des composés dont la masse moléculaire par fonction H est aussi petite que possible. Certains composés présentent des fonctions méthylol ($-CH_2OH$), qui lors de la réaction s'ajoutent aux fonctions de même type crées par le galactose et autres sucres ayant une fonction aldéhyde.

Le rapport masse molaire par fonction H est le suivant :

| | |
|---|---|
| pour l'urée : | 15 |
| pour le phénol : | 18,8 |
| pour l'anhydride phtalique : | 54,7 |
| pour l'aniline : | 13,3 |
| pour le toluène : | 18,4 |

Parmi les composés ci-dessus, les composés préférés sur le plan commercial sont l'aniline, l'urée, le phénol et le toluène, sachant que l'urée n'est utilisable que si la résine n'a pas besoin de résister à l'eau.

Il est intéressant de produire une résine ne possédant pas plus de sucre du type galactose qu'il ne peut se rattacher par la fonction aldéhyde aux fonctions H du composé choisi. Il n'est pas nécessaire qu'il reste lorsque ceci est réalisé assez de fonctions H pour que l'égalité entre les fonctions H et les fonctions méthylol soit obtenue. En effet, la polymérisation peut être obtenue par accouplement d'une fonction H avec une fonction méthylol mais aussi par accouplement de deux fonctions méthylol. On peut aussi noter que les fonctions méthylol des sucres du type galactose et du type glucose qui restent non-modifiées dans la résine seront en compétition avec les fonctions méthylol greffées sur le composé choisi pour la polymérisation.

Le rapport entre le nombre de molécules de lactose sur le nombre de molécules du composé choisi est de préférence égal à la moitié du nombre de fonctions H par molécule du composé choisi.

Ce rapport est le suivant :

3,5 dans le cas de l'aniline
2 dans le cas de l'urée
2,5 dans le cas du phénol
2,5 dans le cas du toluène

Ainsi, connaissant le poids de galactose ou sucres du même type contenu dans la solution, on peut calculer le poids du composé à fonction H.

Le mélange ainsi déterminé est introduit dans un réacteur où il est brassé et chauffé à une température inférieure à 100°C environ pour éviter la polymérisation.

On arrête la réaction de préférence lorsque la totalité du galactose ou sucre du même type a réagi avec le composé à fonction H.

A la fin de la cuisson, on obtient ainsi un mélange de sucres qui n'ont pas réagi et de molécules du composé à fonction H auxquelles sont attachées des molécules de galactose (ou sucres du même type). Les masses moléculaires des sucres qui n'ont pas réagis sont nécessairement plus faibles que celles du composé à fonction H choisi modifiées par la cuisson.

Les résines connues sont commercialisées en général sous forme de solutions aqueuses à 65% de solides. On peut donc dans le cas de la présente invention, ajuster le contenu d'eau de la solution obtenue pour obtenir le pourcentage ci-dessus.

On va maintenant décrire l'étape de polymérisation de la résine.

La résine obtenue quelle que soit sa nature, se polymérise au-dessus d'une température d'environ 102°C. Cette réaction de polymérisation est exothermique. La température peut atteindre 185 à 190°C. Pour éviter l'évaporation de l'eau,on maintient dans le réacteur une pression suffisante par exemple égale à 3 bars. On arrête la réaction avant que la polymérisation soit complète.

On constate que les résines à base de galactose obtenues selon le procédé conforme à l'invention sont beaucoup moins visqueuses que celles à base de formaldéhyde.

Les résines à base de galactose (ou sucre du même type) obtenues selon le procédé conforme à l'invention présentent des résistances à la rupture au moins égales à des résines à base de formaldéhyde. De plus, les résines obtenues selon l'invention, ne présentent pas de risque d'émanation de vapeurs nocives telles que le formaldéhyde.

Les résines obtenues conformément à l'invention remplacent ainsi avantageusement les résines formaldéhydes dans la fabrication des panneaux de bois contreplaqué ou en aggloméré.

Lors de cette fabrication, on mélange la résine avec de la sciure ou de la fibre de bois pour réaliser du bois aggloméré ou on applique cette résine sur des plaques de bois pour réaliser du contre-plaqué.

On soumet les panneaux obtenus à l'action d'une presse chauffante pour polymériser la résine. Cette polymérisation n'est jamais complète. On l'arrête lorsqu'elle est jugée suffisante.

Etant donné que les résines obtenues conformément au procédé selon l'invention sont moins visqueuses, on peut prépolymériser celles-ci jusqu'à ce qu'elles atteignent une certaine viscosité avant de les vendre aux fabricants de bois aggloméré ou contre-plaqué ou autres utilisateurs ;

Cette prépolymérisation peut être arrêtée par refroidissement brutal.

Etant donné que ces résines sont prépolymérisées, la durée de polymérisation lors de l'utilisation finale est au moins aussi courte que dans le cas des résines classiques, ce qui est particulièrement intéressant pour les utilisateurs.

Le déposant a constaté par ailleurs que l'on pouvait obtenir des résines ayant un pouvoir durcissant accru considérablement en augmentant, en particulier en doublant la quantité employée du corps porteur de fonction hydrogène au-dessus des valeurs optimales définies ci-dessus.

Le déposant a constaté d'autre part que la formation de résines à base de corps porteurs de fonctions aldéhydes venant de rejets de l'industrie alimentaire pouvait être obtenue aussi bien en milieu basique qu'en milieu acide. Il est donc possible de développer une gamme beaucoup plus étendue de résines thermodurcissables utiles dans toutes les applications dans lesquelles on emploie actuellement des résines obtenues à partir de formol.

Etant donné que le procédé selon la présente invention permet d'obtenir des résines ayant un pouvoir thermodurcissant au moins égal au double de celui obtenu selon le procédé décrit plus haut, on diminue par un facteur de l'ordre de quatre la durée de l'opération de thermodurcissement (polymérisation) toutes autres conditions restant les mêmes. Il est possible en général de se dispenser d'avoir à prépolymériser la résine qui est une opération delicate et coûteuse.

Si, par exemple, on choisit d'utiliser du phénol comme corps porteur de fonctions hydrogène et de lactose hydrolysé comme corps porteur de fonctions aldéhydes, selon les conditions définies plus haut, on utiliserait une mole de phénol pour trois moles de lactose. Au contraire, selon le procédé conforme à la présente invention, on utilise deux moles de phénol pour trois moles de lactose.

La raison principale de ce changement réside dans l'équilibre entre les différentes formes de glucose. Bien que cet équilibre ne contienne que des traces de glucose dit droit, il peut être déplacé par la production de nouvelles traces de ce type de glucose, si ces traces sont éliminées au fur et à mesure de leur production par une réaction chimique adéquate. Dans le cas présent, les traces de glucose droit, qui possède une fonction aldéhyde, sont captées par le corps porteur de fonctions hydrogène si bien que le glucose agit comme s'il était du galactose.

Il est à remarquer que, au contraire des résines commerciales actuelles obtenues à partir de formol, les résines objets de la présente invention, n'ont pas à contenir des excès de corps porteurs de fonctions H ou de corps porteurs de fonctions aldéhydes n'ayant pas réagi ensemble.

La réaction de formation de la résine entre les sucres porteurs de fonctions aldéhydes et le corps porteur de fonctions hydrogène utilisés est légèrement exothermique et commence dès la mise en présence de ces corps. Elle est évidemment accélérée par une température ambiante plus élevée, mais cette température doit rester relativement faible pour ne pas favoriser la caramélisation des sucres. Une température de 60° C est très favorable.

La réaction de formation de la résine, si elle n'est pas complète quand la résine est mise en fût, continue dans le fût à la température ambiante si bien que l'on peut, si on le souhaite, laisser mûrir ainsi la résine dans les fûts avant de l'utiliser.

Par ailleurs, selon un autre perfectionnement de la présente invention, on obtient la résine quel que soit le pH du milieu dans lequel la résine est formée. Le déposant a en effet préparé des résines en milieu acide, comme décrit dans le brevet principal, mais également en milieu quasi neutre (par exemple en milieu de pH : 6,5 ; 7 ; 7,5) ainsi qu'en milieu fortement alcalin (par exemple en milieu de pH : 9 ; 10 ; 12). Les résines basiques sont différentes des resines acides par l'aspect physique. Elles sont brunâtres au lieu d'être blanches. Elles ont une odeur de "colle", plus prononcée. Elles se séparent moins en deux phases distinctes : cette séparation est plus longue.

En effet, les résines selon la présente invention, quand elles ne sont pas agitées, se séparent en deux parties : une partie qui paraît solide et une partie qui paraît liquide. Dès que l'on agite la résine, les deux parties se mélangent complètement. On peut, toutefois, se servir de la partie qui paraît solide indépendamment de la partie qui paraît liquide. On obtient alors des résines concentrées encore plus performantes. Néanmoins, si ceci peut être utile dans des cas particuliers (poids de résine employé très faible, durée de polymérisation écourtée), il faut alors pouvoir disposer de la partie de la résine qui paraît liquide et qui n'a pas de pouvoir durcissant adéquat.

On peut encore aller plus loin et, en traitant par un évaporateur ou une centrifugeuse la partie de la résine qui paraît solide, on peut obtenir une résine solide.

La polymérisation des résines basiques ou neutres se fait dans les mêmes conditions que celle des résines acides. D'ailleurs, il peut être avantageux pour obtenir, par exemple, une meilleure tenue à l'eau, de modifier le pH de la résine, basique ou acide, avant de l'employer. Un pH de 6,5 paraît favorable à l'égard de la résistance à l'eau.

Les moyens de modification du pH, tant pour la phase d'hydrolyse que pour celle de formation de la résine, que avant l'emploi de celle-ci, ne sont pas arbitraires. Il y a, dans le petit lait ou le lactosérum par exemple, des quantités faibles mais non négligeables de sels minéraux. Les ions de ces minéraux peuvent même jouer un rôle de catalyseur pour la formation de la résine. Mais ces sels peuvent aussi empêcher les modification de pH et former des solutions tampons. Pour ne pas avoir à ajouter des quantités d'acide ou de base trop importantes et susceptibles d'affecter les propriétés de la résine, on choisit de modifier le pH en employant des acides ou des bases qui ne déplacent pas l'équilibre des sels présents dans le mélange. On peut, en plus

ou plutôt, choisir ces acides ou ces bases pour les effets bénéfiques qu'ils ont sur les propriétés de la résine. On peut, par exemple, employer l'acide stéarique ou des composés phosphorés pour augmenter la résistance à l'eau ou au feu.

Exemples :

1) Dans le cas du phénol agissant sur du lactose, du petit lait ou du lactosérum qui ont été hydrolysés, le rapport molaire optimal selon le procédé décrit dans le brevet principal est de trois moles de lactose pour une mole de phénol. En utilisant ces proportions, on s'attendait à ce que la résine contienne du glucose n'ayant pas réagi avec

Les essais ont montré que le poids prévu de sucres primaires n'ayant pas réagi a bien été obtenu mais que la moitié du galactose n'avait pas réagi.

Compte tenu de ce résultat, on a doublé la proportion molaire de phénol sans obtenir un excès de phénol libre dans le milieu réactionnel final. Les proportions utilisées ont été alors trois moles de lactose pour deux moles de phénol. Aucun sucre primaire n'ayant pas réagi avec le phénol n'a pu être décelé.

En suivant la température en fonction du temps pendant la polymérisation de deux exemples d'agglomérés de bois qui ne différaient que par la résine employée, l'une étant la résine optimale suivant la méthode précédente, l'autre étant la résine optimale suivant la présente méthode, on a obtenu une vitesse de polymérisation approximativement quatre fois plus rapide avec la seconde résine (3,2 fois plus rapide en moyenne). En effet, pour des poids de résine égaux, le rapport entre le nombre de ponts de polymérisation potentiels pour la résine de la présente méthode et la résine optimale selon la méthode précédente est 1,85. Les durées de polymérisation sont proportionnelles au carré du nombre de ponts de polymérisation potentiels.

2) Les mêmes essais que ceux de l'exemple 1 ont été effectués en employant de l'urée au lieu du phénol. Alors que la résine optimale suivant le brevet principal correspondait à deux moles de lactose par mole d'urée, la nouvelle résine correspondait à une mole de lactose par mole d'urée seulement.

Comme, dans ce cas, le rapport entre le nombre de ponts de polymérisation potentiels pour les deux résines était également de 1,85, on a pu vérifier avec exactitude que la diminution des durées de polymérisation pour des cas identiques, en employant d'une part des résines phénoliques et d'autre part les résines à base d'urée, favorisait les résines de la présente invention par rapport aux résines correspondantes selon la méthode précédente d'une manière quantitativement identique.

3) Un lactosérum, provenant de l'industrie des petits suisses, concentré à 48%, présente la composition suivante :

| | |
|---|---|
| 384 g | de lactose |
| 20,4 g | de protéines |
| 25,3 g | de $CaCl_2$ |
| 22,0 g | de KCl |
| 21,0 g | de $PO_4Fe$ |
| 7,3 g | de NaCl |
| 704,1 g | d'eau |

Le pH de ce lactosérum est de 3,9 du fait de la présence de 0,383 g d'acide lactique.

Pour ramener le pH à 6,5 pour l'hydrolyse par la lactase, il a fallu ajouter 35 g de soude en paillettes, alors que la neutralisation de l'acide lactique exige seulement 0,1 g de soude. Le reste de la soude correspondait bien au déplacement du $CaCl_2$ et du $PO_4Fe$.

5,12 ml de lactase commercialisée sous la référence 3000L de NOVO INDUSTRI ont été ajoutés au milieu réactionnel.

Après hydrolyse du lactose par la lactase à une température de 41°C et sous un pH constant de 6,5, dans un réacteur muni d'un système de brassage, pour une durée de 12 heures, aucun trace de lactose n'a été décelée.

Après ajout du phénol dans les proportions optimales selon le procédé de la présente addition, soit 70,4 g de phénol, il ne restait plus qu'à ajuster le pH à la valeur désirée.

En utilisant soit de la soude (résine basique) soit de l'acide sulfurique (résine acide), la proportion de l'une ou l'autre nécessaire pour obtenir un pH de 11 ou un pH de 3,5 est très faible, mais ne correspond pas à la réalité.

La soude transforme le phénol en phénoxyde de sodium, ce qui exige 30 g de soude. Cette transformation en phénoxyde est la différence majeure entre les résines basiques phénoliques selon la présente addition et les résines acides correspondantes. Cette transformation n'affecte pas non plus la formation de la résine ni sa polymérisation mais permet d'obtenir des propriétés secondaires différentes telles qu'une meilleure tenue à l'eau. En utilisant, au contraire, de l'acide sulfurique pour créer une résine acide, il a fallu agir sur les bases déplacées avant l'hydrolyse par la soude, c'est-à-dire sur les hydroxydes de fer et de calcium. Il a fallu pour cela utiliser 37 g de la solution d'acide sulfurique à 98%.

Les deux résines utilisées pour fabriquer des contreplaqués et des agglomérés de bois, ont donné des résultats identiques.

## Revendications

1. Procédé pour la fabrication de résines thermodurcissables par réaction entre un premier composé ayant au moins une fonction aldéhyde et un second composé organique ayant au moins une fonction hydrogène, caractérisé en ce qu'on utilise en tant que premier composé un déchet agricole contenant au moins un sucre, ce dernier étant hydrolisé dans des conditions telles qu'on obtient un sucre ayant au moins une fonction adhéhyde.

2. Procédé conforme à la revendication 1, caractérisé en ce que le déchet agricole est constitué par du petit lait renfermant du lactose.

3. Procédé conforme à la revendication 1, caractérisé en ce que le déchet agricole est constitué par de l'amidon.

4. Procédé conforme à la revendication 3, caractérisé en ce que le petit lait provient de la fabrication des fromages.

5. Procédé conforme à la revendication 3, caractérisé en ce que l'amidon provient du maïs.

6. Procédé conforme à l'une des revendications 2 ou 4, caractérisé en ce que le petit lait est débarrassé de son contenu en protéines par ultrafiltration.

7. Procédé conforme à l'une des revendications 2, 4 ou 6, caractérisé en ce que le petit lait est hydrolysé pour transformer le lactose en galactose et glucose.

8. Procédé conforme à la revendication 7, caractérisé en ce que l'hydrolyse est effectuée en milieu neutre par réaction avec la lactase et on récupère celle-ci en fin de réaction.

9. Procédé conforme à l'une des revendications 7 ou 8, caractérisé en ce que la solution obtenue après la réaction d'hydrolyse est utilisée directement pour être transformée en résine par réaction avec le composé ayant une fonction hydrogène.

10. Procédé conforme à la revendication 9, caractérisé en ce que la température de la réaction est maintenue à une valeur inférieure à 100° C environ.

11. Procédé conforme à l'une des revendications 1 à 10, caractérisé en ce que le composé ayant une fonction hydrogène est choisi parmi l'aniline, l'urée, le phénol et le toluène.

12. Procédé conforme à l'une des revendications 7 à 11, caractérisé en ce que le rapport du nombre de molécules de lactose sur le nombre de molécules du composé ayant une fonction hydrogène est sensiblement égal à la moitié du nombre de fonctions hydrogène dudit composé.

13. Procédé conforme à l'une des revendications 10 à 12, caractérisé en ce que la solution contenant la résine obtenue est chauffée à une température supérieure à 102° C et sous une pression suffisante pour éviter l'évaporation de l'eau de cette solution, afin de polymériser partiellement la résine.

14. Procédé conforme à la revendication 13, caractérisé en ce qu'on arrête la polymérisation en refroidissant brutalement la solution.

15. Procédé conforme à l'une des revendications 1 à 11, caractérisé en ce qu'on fait réagir le sucre avec un excès du composé ayant une fonction hydrogène.

16. Procédé conforme à la revendication 15, dans lequel le sucre est du lactose hydrolisé en galactose et en glucose, caractérisé en ce qu'on fait réagir le mélange de galactose et de glucose avec une quantité molaire de composé ayant une fonction hydrogène double de celle nécessaire pour faire réagir le galactose seul.

17. Procédé conforme à l'une des revendications 15 ou 16, caractérisé en ce que la réaction est effectuée en milieu acide, basique, ou neutre.

18. Procédé conforme à l'une des revendications 15 à 17, caractérisé en ce que la réaction est effectuée à une température de l'ordre de 60° C.

19. Procédé conforme à l'une des revendications 17 à 18, caractérisé en ce que l'acide ou la base utilisé est d'une nature telle qu'il ne déplace pas l'équilibre des sels minéraux présents dans le mélange réactionnel.

20. Procédé conforme à l'une des revendications 7 à 19, caractérisé en ce qu'on ajoute au mélange réactionnel de l'acide stéarique ou un composé phosphoré.